# EUROPEAN PATENT APPLICATION

(11) **EP 4 607 776 A1**
(43) Date of publication of application: **27.08.2025**
(21) Application number: 23879839.1
(22) Date of filing: 18.10.2023
(51) Int. Cl.: H02K 35/02

(54) **POWER GENERATOR**

(30) Priority: 21.10.2022 JP 2022169385
(71) Applicant: Yamauchi Corporation, Hirakata-shi, Osaka 573-1132 (JP)
(72) Inventor: HAYASHI Takayoshi, Hirakata-shi, Osaka 573-1132 (JP)
(74) Representative: Müller Hoffmann & Partner
(86) International application number: PCT/JP2023/037739
(87) International publication number: WO 2024/085196

(57) **Abstract**

An electric generator 100 includes a tubular member 10, a first magnet 12, coils 14a and 14b, and a second magnet 16. The first magnet 12 is fixed to the tubular member 10. The coils 14a and 14b are fixed along an exterior surface of the tubular member 10. The second magnet 16 is arranged a hollow portion 20a of the tubular member 10 such that the second magnet 16 is located more inward in the radial direction the tubular member 10 than the first magnet 12 as seen from an axial direction X of the tubular member 10.

## Description

### TECHNICAL FIELD

The present invention relates to an electric generator.

### BACKGROUND ART

Various electric generators capable of converting kinetic energy into electrical energy have traditionally been proposed. For example, a power generator disclosed in Patent Document 1 includes a tubular member, a coil arranged on an outer circumference of the tubular member, a first magnet arranged in an inner space of the tubular member, a second magnet arranged on an outside of the tubular member, and an actuation part that moves one of the tubular member and the second magnet relative to the other.

In the power generator disclosed in Patent Document 1, the actuation part moves one of the tubular member and the second magnet relative to the other, causing the first magnet in the tubular member to rush through the inner space of the coil due to a repulsive magnetic force generated between the first magnet and the second magnet. This causes an electric current to flow in the coil. That is, electricity is generated.

The electric generator as described above is used by being incorporated in various devices, such as a remote-control device that controls electronic equipment.

### LIST OF PRIOR ART DOCUMENTS

### PATENT DOCUMENT

Patent Document 1: JP2021-27633A

### SUMMARY OF INVENTION

### TECHNICAL PROBLEM

Meanwhile, to reduce the size of the device in which the electric generator is incorporated, it is required to reduce the size of the electric generator itself. In this connection, the power generator of Patent Document 1 can be considered as being suitable for the reduction in size because of its simple structure.

On the other hand, in the power generator of Patent Document 1, it is necessary to move one of the tubular member and the second magnet relative to the other, which necessitates attachment of the second magnet to a member different from the tubular member. For example, in the power generator illustrated in Figure 1 of Patent Document 1, the second magnet of a ring shape is fixed on the inner peripheral surface of a housing in which main components such as the tubular member are contained. In this case, it is necessary to secure certain dimensions in the radial direction of the tubular member (a direction perpendicular to the tube axis direction) to arrange the second magnet.

Accordingly, an objective of the present invention is to provide a smaller electric generator.

### SOLUTION TO PROBLEM

The gist of the present invention is an electric generator as described below.
(1) An electric generator, including:
   a tubular member including a hollow portion;
   a first magnet fixed to the tubular member;
   a coil fixed along an exterior surface of the tubular member; and
   a second magnet magnetized in an axial direction of the tubular member, the second magnet being arranged in the hollow portion such that the second magnet is located more inward in a radial direction of the tubular member than the first magnet as seen from the axial direction and being movable in the axial direction.
(2) The electric generator according to the above (1), wherein the first magnet has a ring shape.
(3) The electric generator according to the above (1) or (2), wherein the first magnet and the coil are provided in different positions in the axial direction.
(4) The electric generator according to any one of the above (1) to (3), further including a drive part that moves the second magnet in the axial direction relative to the coil.
(5) The electric generator according to the above (4), wherein
   the drive part includes:
   a third magnet arranged in the hollow portion of the tubular member;
   a holding member that is arranged in the hollow portion while being capable of moving in the axial direction and that holds the second magnet and the third magnet such that the second magnet is located farther toward one side in the axial direction than the third magnet;
   a fourth magnet provided farther toward an opposite side than the third magnet in the axial direction such that a repulsive force is generated in the axial direction between the fourth magnet and the third magnet;
   a pushing-in part provided while being capable of moving in the axial direction, the pushing-in part moving toward the opposite side in the axial direction, thereby pushing in the holding member from a reference position toward the opposite side; and
   a pushing-back part that holds the fourth magnet, the pushing-back part being provided while being capable of moving in the axial direction in conjunction with the pushing-in part, wherein
   in the reference position, the second magnet is located farther toward the one side than the first magnet.
(6) The electric generator according to the above (5), further including a housing that contains the tubular member, the first magnet, the coil, the second magnet, and the drive part, wherein
   the drive part further includes:
   an operation part, a part of which protrudes to an outside of the housing, the operation part being provided while being capable of moving in the axial direction in conjunction with the pushing-in part and the pushing-back part; and
   a biasing member that biases the operation part, the pushing-in part, and the pushing-back part toward the one side.
(7) The electric generator according to any one of the above (1) to (6), wherein
   the coil includes a first coil and a second coil that are provided spaced apart in the axial direction, and
   the first magnet is provided between the first coil and the second coil in the axial direction.
(8) The electric generator according to the above (7), wherein the second coil and the first magnet are arranged such that the second magnet passes through an inside of the first coil in the radial direction and reaches an inside of the first magnet in the radial direction.

### ADVANTAGEOUS EFFECTS OF INVENTION

According to the present invention, a smaller electric generator can be obtained.

### BRIEF DESCRIPTION OF DRAWINGS

[Figure 1] Figure 1 is a diagram illustrating a schematic configuration of an electric generator according to a first embodiment of the present invention.
[Figure 2] Figure 2 shows diagrams for describing the action of the electric generator.
[Figure 3] Figure 3 shows diagrams illustrating an electric generator according to a second embodiment of the present invention.
[Figure 4] Figure 4 is a schematic perspective view illustrating an electric generator according to a third embodiment of the present invention.
[Figure 5] Figure 5 is a schematic view illustrating the inner structure of the electric generator illustrated in Figure 4.
[Figure 6] Figure 6 is a diagram for describing the action of the electric generator illustrated in Figure 4.
[Figure 7] Figure 7 is a diagram for describing the action of the electric generator illustrated in Figure 4.
[Figure 8] Figure 8 is a diagram for describing the action of the electric generator illustrated in Figure 4.
[Figure 9] Figure 9 is a diagram illustrating an electric generator according to a fourth embodiment of the present invention.
[Figure 10] Figure 10 is a diagram for describing the action of the electric generator illustrated in Figure 9.
[Figure 11] Figure 11 is a diagram for describing the action of the electric generator illustrated in Figure 9.
[Figure 12] Figure 12 shows diagrams illustrating an electric generator according to a fifth embodiment of the present invention.

### DESCRIPTION OF EMBODIMENTS

The electric generator according to embodiments of the present invention will now be described with reference to drawings.

### (First Embodiment)

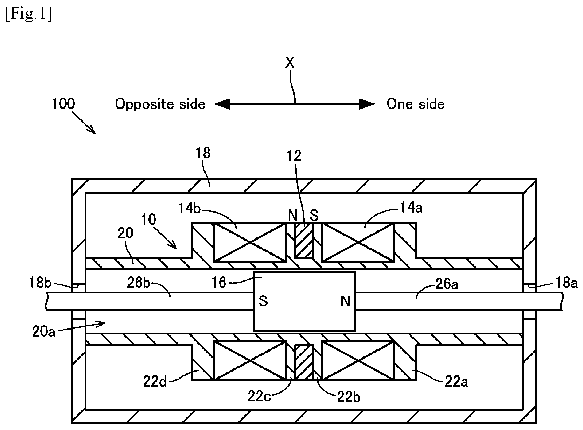

Figure 1 is a diagram illustrating a schematic configuration of an electric generator according to the first embodiment of the present invention. As illustrated in Figure 1, an electric generator 100 according to the embodiment includes a tubular member 10, a first magnet 12, a pair of coils 14a and 14b, a second magnet 16, and a housing 18.

The tubular member 10 consists of a non-magnetic material. In the embodiment, the tubular member 10 has a hollow-cylindrical shape. More specifically, the tubular member 10 includes a cylindrical part 20 that includes a hollow portion 20a inside and four flange portions 22a, 22b, 22c, and 22d that protrude from the outer peripheral surface of the cylindrical part 20 outward in the radial direction of the cylindrical part 20. The flange portions 22a, 22b, 22c, and 22d are provided in line in an axial direction X of the tubular member 10 and spaced apart from one another. In the description below, the reference simply as "radial direction" means the radial direction of the tubular member. Similarly, the reference simply as "axial direction" means the axial direction of the tubular member. Although not described in detail, the shape of the tubular member is not limited to a hollow-cylindrical shape and may be square tubular. When the tubular member does not have a hollow-cylindrical shape, the radial direction of the tubular member refers to a direction perpendicular to the axial direction of the tubular member.

The first magnet 12 is fixed to the tubular member 10. In the embodiment, the first magnet 12 has a ring shape. The first magnet 12 is fitted between the flange portion 22b and the flange portion 22c.

The first magnet 12 is magnetized in the axial direction X. In the embodiment, the first magnet 12 is fixed to the tubular member 10 such that one side in the axial direction X is a south pole and the opposite side is a north pole. A known permanent magnet can be used as the first magnet 12. For example, an Nd-Fe-B sintered magnet can be used as the first magnet 12.

The coils 14a and 14b are fixed along the exterior surface (outer peripheral surface) of the tubular member 10. In the embodiment, the coil 14a is provided on one side of the first magnet 12 and the coil 14b is provided on the opposite side of the first magnet 12 in the axial direction X. More specifically, the coil 14a is wound around the outer peripheral surface of the cylindrical part 20 between the flange portion 22a and the flange portion 22b. The coil 14b is wound around the outer peripheral surface of the cylindrical part 20 between the flange portion 22c and the flange portion 22d. In the embodiment, the coil 14a corresponds to the first coil and the coil 14b corresponds to the second coil.

The second magnet 16 is arranged in the hollow portion 20a of the cylindrical part 20 while being capable of moving in the axial direction X relative to the tubular member 10. In other words, the second magnet 16 is arranged in the hollow portion 20a of the cylindrical part 20 such that the second magnet 16 can pass through the inside of the first magnet 12 in the radial direction. In the embodiment, the second magnet 16 has a solid-cylindrical shape. The second magnet 16 is magnetized in the axial direction X. In the embodiment, the second magnet 16 is inserted in the cylindrical part 20 such that one side in the axial direction X is the north pole and the opposite side is the south pole. As in the first magnet 12, a known permanent magnet can be used as the second magnet 16.

The tubular member 10, the first magnet 12, the coils 14a and 14b, and the second magnet 16 are contained in the housing 18. In the embodiment, the tubular member 10 is fixed to the housing 18. A pair of openings 18a and 18b is formed in the housing 18. The openings 18a and 18b are formed in communication with the hollow portion 20a of the tubular member 10.

A rod-like operation part 26a is provided extending from the second magnet 16 to one side in the axial direction X, and a rod-like operation part 26b is provided extending from the second magnet 16 to the opposite side in the axial direction X. The operation parts 26a and 26b are each fixed to the second magnet 16. The operation part 26a protrudes from the opening 18a to the outside of the housing 18, and the operation part 26b protrudes from the opening 18b to the outside of the housing 18. In the embodiment, the operation parts 26a and 26b function as a drive part.

The operation part 26a and the operation part 26b may be separate members or may be of one member. In the case in which the operation part 26a and the operation part 26b are of one member, for example, a rod-like member can be inserted through the second magnet 16, so that one side of the rod-like member can be used as the operation part 26a and the opposite side as the operation part 26b.

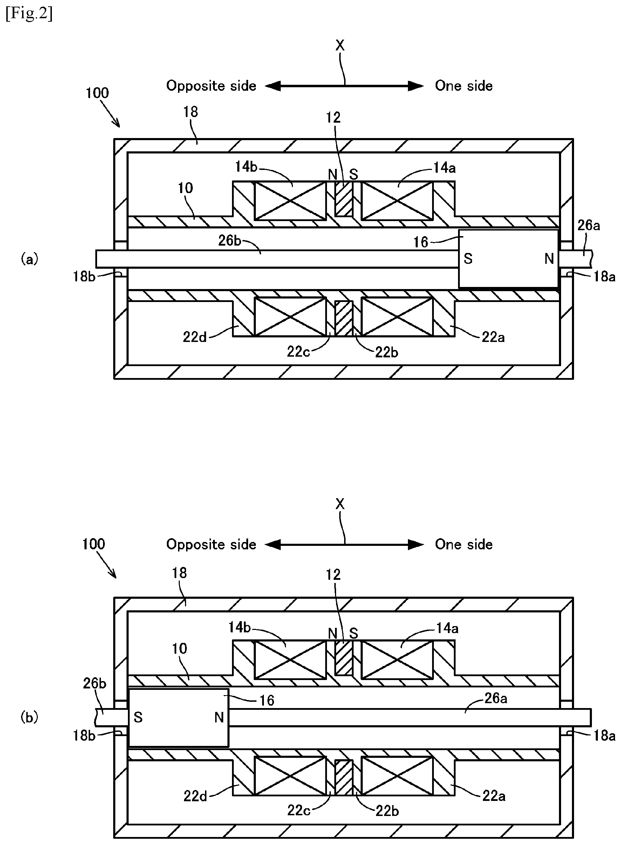

Figure 2 shows diagrams for describing the action of the electric generator 100. When the electric generator 100 is in a state illustrated in Figure 1, the first magnet 12 and the second magnet 16 are magnetically attracted to each other in the axial direction X. This causes the second magnet 16 to be located such that the center of the first magnet 12 and the center of the second magnet 16 substantially coincide with each other in the axial direction X. Hereinafter, the state of the electric generator 100 as illustrated in Figure 1 will be referred to as an attractive state.

With reference to Figure 1 and Figure 2 (a), with the electric generator 100 in the attractive state, pushing the operation part 26b toward one side in the axial direction X causes the second magnet 16 to move to the one side in the axial direction X. When the south pole of the second magnet 16 is moved farther toward the one side than the south pole of the first magnet 12 in the axial direction X, the second magnet 16 is pushed toward the one side in the axial direction X due to a magnetic repulsive force generated between the south pole of the first magnet 12 and the south pole of the second magnet 16. In the embodiment, the opening 18a is formed in a size that does not allow the second magnet 16 to pass through. Accordingly, the second magnet 16 is pushed against the inner surface of the housing 18 due to a repulsive force generated between the south pole of the first magnet 12 and the south pole of the second magnet 16. Hereinafter, the state of the electric generator 100 illustrated in Figure 2 (a) will be referred to as a first repulsive state.

As in the case described above, with reference to Figure 1 and Figure 2 (b), with the electric generator 100 in the attractive state, pushing the operation part 26a toward the opposite side in the axial direction X causes the second magnet 16 to move to the opposite side in the axial direction X. When the north pole of the second magnet 16 is moved farther toward the opposite side than the north pole of the first magnet 12 in the axial direction X, the second magnet 16 is pushed toward the opposite side in the axial direction X due to a magnetic repulsive force generated between the north pole the first magnet 12 and the north pole of the second magnet 16. In the embodiment, the opening 18b is formed in a size that does not allow the second magnet 16 to pass through. Accordingly, the second magnet 16 is pushed against the inner surface of the housing 18 due to a repulsive force generated between the north pole the first magnet 12 and the north pole of the second magnet 16. Hereinafter, the state of the electric generator 100 illustrated in Figure 2 (b) will be referred to as a second repulsive state.

With reference to Figure 2 (a), with the electric generator 100 in the first repulsive state, pushing the operation part 26a toward the opposite side in the axial direction X causes the second magnet 16 to move to the opposite side in the axial direction X. When the south pole of the second magnet 16 is moved farther toward the opposite side than the south pole of the first magnet 12 in the axial direction X, the second magnet 16 moves to the position illustrated in Figure 1 at high speed due to a magnetic attractive force generated between the first magnet 12 and the second magnet 16. That is, the second magnet 16 moves through the insides of the coils 14a and 14b at high speed. In the embodiment, after passing through the inside of the coil 14a and the inside of the first magnet 12, the second magnet 16 reaches the inside of the coil 14b. In this way, a current is generated in the coils 14a and 14b. Note that as a result of studies conducted by the present inventors, it has been revealed that when the state of the electric generator 100 changes from the first repulsive state to the attractive state, the second magnet 16 vibrates near the first magnet 12 at high speed in the axial direction X with respect to the first magnet 12. In the embodiment, due to the high-speed vibration, it is possible to efficiently generate a current in the coils 14a and 14b. Although not described in detail, the coils 14a and 14b may be electrically connected to an external device (such as a radio transmitter) via a rectifier and the like, for example. In this case, the current generated in the coils 14a and 14b can be used to activate the external device.

As in the case described above, with reference to Figure 2 (b), with the electric generator 100 in the second repulsive state, pushing the operation part 26b toward one side in the axial direction X causes the second magnet 16 to move at high speed to the position illustrated in Figure 1. That is, the second magnet 16 moves through the inside of the coils 14a and 14b at high speed. In this way, a current is generated in the coils 14a and 14b. Furthermore, when the state of the electric generator 100 changes from the second repulsive state to the attractive state, the second magnet 16 vibrates at high speed near the first magnet 12 in the axial direction X with respect to the first magnet 12. Due to the high-speed vibration, it is possible to efficiently generate a current in the coils 14a and 14b.

As described above, with the electric generator 100 according to the embodiment, it is possible to easily generate electricity by operating the operation parts 26a and 26b. Furthermore, due to an attractive force generated between the first magnet 12 and the second magnet 16, it is possible to move the second magnet 16 at high speed and vibrate the second magnet 16 at high speed. In this way, it is possible to efficiently generate electricity.

Furthermore, in the electric generator 100 according to the embodiment, electricity is generated by the second magnet 16 moving through the inside in the radial direction of the first magnet 12 and the coils 14a and 14b, which are attached to the tubular member 10. In this case, the first magnet 12, the coils 14a and 14b, and the second magnet 16 can be brought close to one another in the radial direction. As a result, it is possible to build a smaller electric generator 100.

In particular, in the electric generator 100 according to the embodiment, the coil 14a, the first magnet 12, and the coil 14b are arranged in line in the axial direction X. In this way, it is possible to sufficiently bring the first magnet 12, the coils 14a and 14b, and the second magnet 16 close to one another in the radial direction. As a result, a sufficient reduction in size of the electric generator 100 can be achieved. Furthermore, it is possible to cause the first magnet 12 and the second magnet 16 to efficiently act each other, thereby smoothly move the second magnet 16.

### (Modifications)

In the above-described embodiment, description has been made as to the case of the electric generator 100 including a pair of the coils 14a and 14b. However, the number of coils included in the electric generator 100 may be one or may be three or more. This similarly applies to embodiments described below.

In the above-described embodiment, description has been made as to the case of the first magnet 12 being provided on an outer-surface side of the tubular member 10 in the radial direction. However, the position in the axial direction X and the radial direction of the first magnet 12 are not limited to that in the above example. It is sufficient that the first magnet 12 is provided such that the second magnet 16 can pass through the inside of the first magnet 12 in the radial direction. In other words, it is sufficient that the first magnet 12 is fixed to the tubular member 10 such that the first magnet 12 is located outside the second magnet 16 as seen from the axial direction X. Accordingly, for example, the first magnet 12 may be fixed on an inner-peripheral-surface side of the tubular member 10. Furthermore, for example, the first magnet 12 may be embedded within the tubular member 10 (between the outer peripheral surface and the inner peripheral surface). Furthermore, for example, in the case in which the tubular member includes two members (a first tubular member and a second tubular member), the first magnet may be fixed between the end face of the first tubular member and the end face of the second tubular member. That is, the arrangement may be made such that the first tubular member, the first magnet, and the second tubular member line up in this order in the axial direction X. This similarly applies to embodiments described below.

In the above-described embodiment, although the first magnet 12 of a ring shape is used, the shape of first magnet is not limited to that in the above example. It is sufficient that the first magnet is configured such that a magnetic attractive force and a repulsive force act on the second magnet 16. Accordingly, for example, a plurality of first magnets may be provided in line in the circumferential direction of the tubular member 10 (so as to surround the tubular member 10), or the first magnet may be provided in a part of the circumferential direction the tubular member 10. This similarly applies to embodiments described below.

In the above-described embodiment, although the north pole (or the south pole) of the first magnet 12 and the north pole (or the south pole) of the second magnet 16 are oriented opposite to each other in the axial direction X, both the north pole (or the south pole) of the first magnet 12 and the north pole (or the south pole) of the second magnet 16 may be oriented in the same direction in the axial direction X. In this case, it is possible to use a magnetic repulsive force and/or attractive force generated between the first magnet 12 and the second magnet 16 to generate electricity. This similarly applies to embodiments described below.

In the above-described embodiment, although the housing 18 functions as a restriction member that restricts the movement of the second magnet 16 in the axial direction X, a separate restriction member that restricts the movement of the second magnet 16 in the axial direction X may be provided inside the housing 18 or outside the housing 18.

### (Second Embodiment)

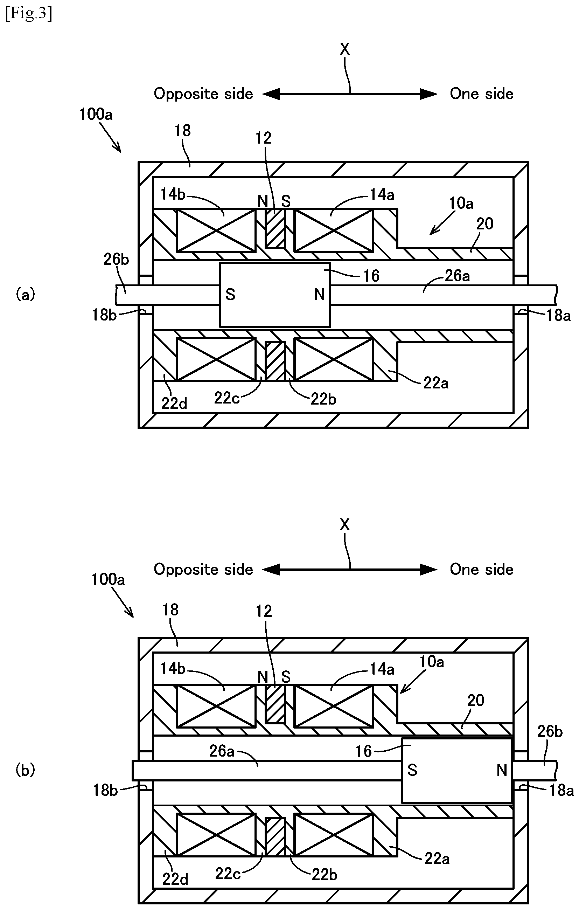

Figure 3 shows diagrams illustrating an electric generator according to the second embodiment of the present invention. Note that in Figure 3, the view (a) illustrates the electric generator in the attractive state, and the view (b) illustrates the electric generator in the first repulsive state. An electric generator 100a illustrated in Figure 3 is different from the electric generator 100 described above in that it includes a tubular member 10a in place of the tubular member 10. In the embodiment, the tubular member 10a is provided such that the travel range of the second magnet 16 up to the opposite side is smaller than the travel range up to the one side in the axial direction X.

The tubular member 10a is different from the tubular member 10 described above in the shape of the cylindrical part 20. Specifically, the cylindrical part 20 of the tubular member 10 illustrated in Figure 1 includes a portion protruding from the flange portion 22d to the opposite side in the axial direction X. However, the cylindrical part 20 of the tubular member 10a does not protrude from the flange portion 22d to the opposite side in the axial direction X. In this way, in the electric generator 100a according to the embodiment, it is possible to reduce the dimension in the axial direction X as compared to the electric generator 100 described above. Still in the embodiment, a part of the cylindrical part 20 may protrude from the flange portion 22d to the opposite side in the axial direction X. However, the amount of protrusion of the cylindrical part 20 up to the opposite side in the axial direction X can be made smaller than the amount of protrusion up to the one side, so that the electric generator can be smaller than the electric generator 100.

The electric generator 100a according to the embodiment can be set to the attractive state illustrated in Figure 3 (a) and the first repulsive state illustrated in Figure 3 (b). As in the electric generator 100 described above, with the electric generator 100a in the first repulsive state, pushing the operation part 26a toward the opposite side in the axial direction X causes the second magnet 16 to move through the inside of the coils 14a and 14b at high speed. In this way, a current flows in the coils 14a and 14b.

### (Third Embodiment)

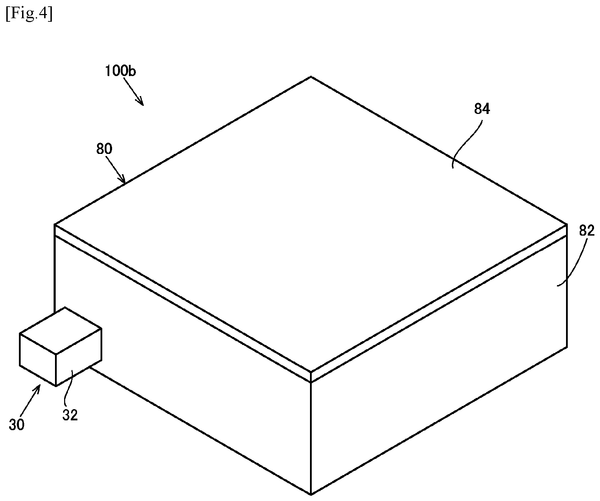

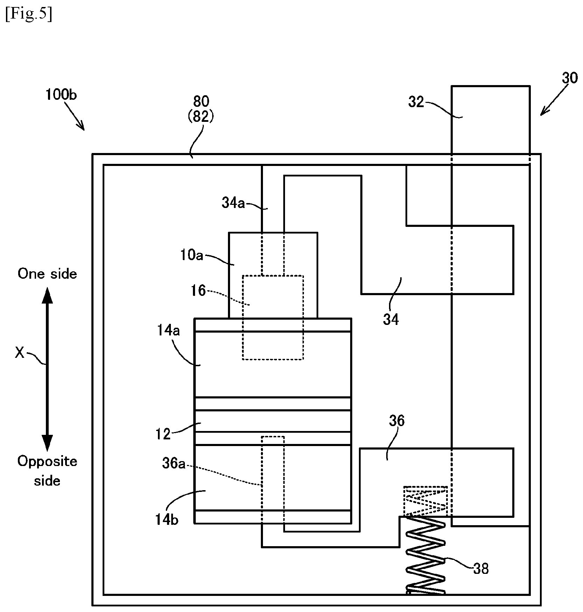

Figure 4 is a schematic perspective view illustrating an electric generator according to the third embodiment of the present invention, and Figure 5 is a schematic view illustrating the inner structure of the electric generator according to the embodiment. Note that Figure 5 illustrates an electric generator 100b while a lid part 84 described later is removed.

As illustrated in Figure 4, the electric generator 100b according to the embodiment includes a cuboid housing 80. The housing 80 includes a container part 82 and a lid part 84 detachably attached to the container part 82.

As illustrated in Figure 5, the tubular member 10a, the first magnet 12, the coils 14a and 14b, the second magnet 16, and a drive part 30 are contained in the container part 82. Note that the tubular member 10a, the first magnet 12, the coils 14a and 14b, and the second magnet 16 have similar configurations to the tubular member 10a, the coils 14a and 14b, and the second magnet 16 illustrated in Figure 3, and therefore are not described in detail. In the embodiment, the tubular member 10a is fixed to the housing 80. Note that the state of the electric generator 100b illustrated in Figure 5 is the state in which the second magnet 16 is pushed toward the one side in the axial direction X due to a magnetic repulsive force generated between the first magnet 12 and the second magnet 16, that is, the repulsive state.

The drive part 30 includes an operation member 32, arm members 34 and 36, and a biasing member 38. The operation member 32 is provided such that a part of the operation member 32 protrudes from the housing 80. Furthermore, the operation member 32 is provided extending to the axial direction X while being capable of moving in the axial direction X with respect to the housing 80. In the embodiment, the operation member 32 is operated directly or indirectly by a user of the electric generator 100b, thereby moves in the axial direction X.

The arm members 34 and 36 are fixed to the operation member 32 and move in the axial direction X integrally with the operation member 32. In the embodiment, the arm members 34 and 36 each consist of a non-magnetic material. A pushing-in part 34a is provided at the leading end portion of an arm member 34, and a pushing-back part 36a is provided at the leading end portion of an arm member 36. Each of the pushing-in part 34a and the pushing-back part 36a is provided extending to the axial direction X. In the embodiment, the pushing-in part 34a is inserted in the tubular member 10a from the one side in the axial direction X, and the pushing-back part 36a is inserted in the tubular member 10a from the opposite side in the axial direction X.

The biasing member 38 biases the operation member 32 and the arm members 34 and 36 toward the one side in the axial direction X. In the embodiment, the biasing member 38 is provided on the opposite side in the axial direction X of the arm member 36 while being clamped between side walls of the arm member 36 and the container part 82. In the embodiment, a coil spring is used as the biasing member 38.

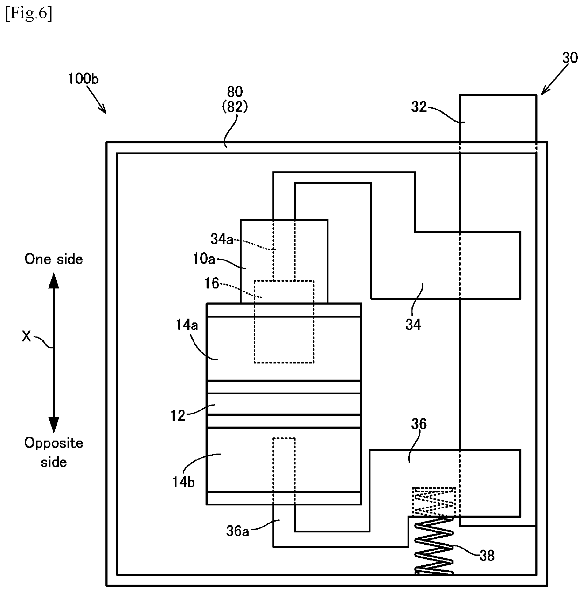

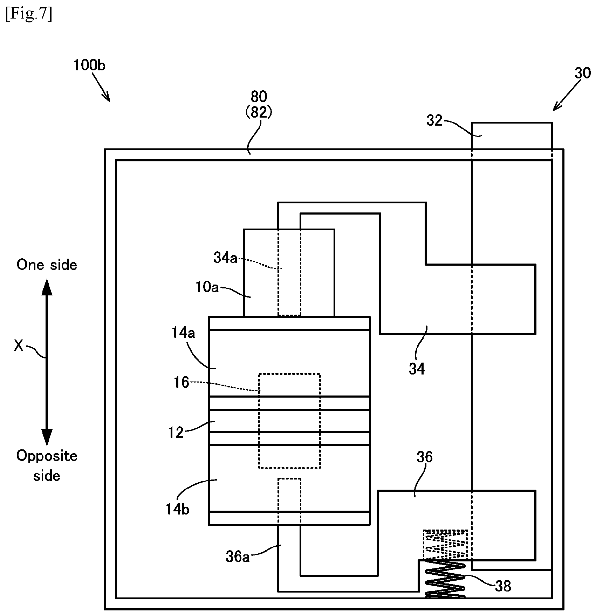

As illustrated in Figures 5 and 6, with the electric generator 100b in the repulsive state, for example, a user pushing in the operation member 32 toward the opposite side in the axial direction X causes the arm member 34 to move to the opposite side in the axial direction X. As a result, the second magnet 16 is pushed in toward the opposite side in the axial direction X by the pushing-in part 34a. As described above, since the arm member 34 consists of a non-magnetic material, the pushing-in part 34a is not magnetically coupled to the second magnet 16. Accordingly, when the operation member 32 is further pushed in, as illustrated in Figure 7, the second magnet 16 moves through the inside of the first magnet 12 at high speed while being freed from the pushing-in part 34a due to a magnetic attractive force generated between the first magnet 12 and the second magnet 16. In this way, as in the electric generator 100a described above, a current flows in the coils 14a and 14b. Furthermore, as described above, since the second magnet 16 moves while being freed from the pushing-in part 34a, the second magnet 16 can vibrate faster in the axial direction X near the first magnet 12. In this way, it is possible to further efficiently generate electricity.

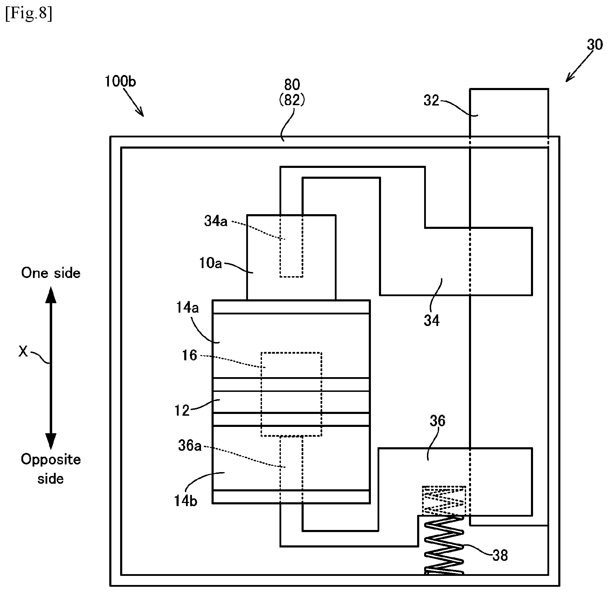

Thereafter, when the user releases his or her hand from the operation member 32, the arm member 36 is pushed back toward the one side in the axial direction X by the biasing member 38. In this way, as illustrated in Figure 8, the second magnet 16 is pushed back toward the one side in the axial direction X by the pushing-back part 36a. As described above, since the arm member 36 consists of a non-magnetic material, the pushing-back part 36a is not magnetically coupled to the second magnet 16. Accordingly, when the pushing-back part 36a further pushes back the second magnet 16 toward the one side in the axial direction X, as illustrated in Figure 5, the second magnet 16 moves to the side of the pushing-in part 34a while being freed from the pushing-back part 36a due to a magnetic repulsive force generated between the first magnet 12 and the second magnet 16. As a result, the second magnet 16 is pushed against the pushing-in part 34a. That is, the state of the electric generator 100b becomes the repulsive state.

As described above, in the electric generator 100b according to the embodiment, the second magnet 16 can be moved at high speed in the axial direction X by pushing in the operation member 32. Furthermore, the electric generator 100b can be returned to the original state by releasing a hand from the operation member 32. As a result, it is possible to smoothly generate electricity.

### (Fourth Embodiment)

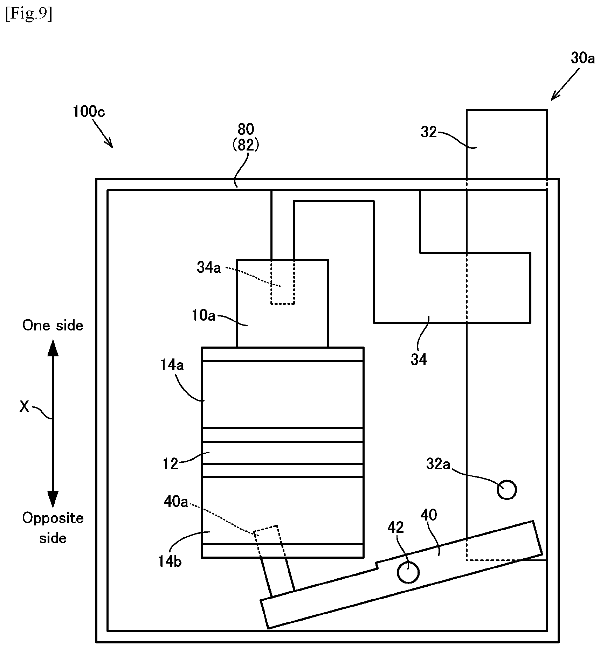

Figure 9 is a schematic view illustrating an electric generator according to the fourth embodiment of the present invention. As illustrated in Figure 9, an electric generator 100c according to the embodiment is different from the electric generator 100b described above in that a locking portion 32a is provided on the operation member 32 and an arm member 40 is provided in place of the arm member 36 and the biasing member 38. As in the arm member 36 described above, the arm member 40 consists of a non-magnetic material. Note that the second magnet 16 is not illustrated in Figure 9 and Figures 10 and 11 described later.

The locking portion 32a is a protrusion fixed to the operation member 32, and is provided so as to be lockable to the arm member 40. A pushing-back part 40a is provided at the leading end portion of the arm member 40. The pushing-back part 40a is inserted in the tubular member 10a from the opposite side in the axial direction X. The arm member 40 is supported by a shaft member 42 swingably around the shaft member 42.

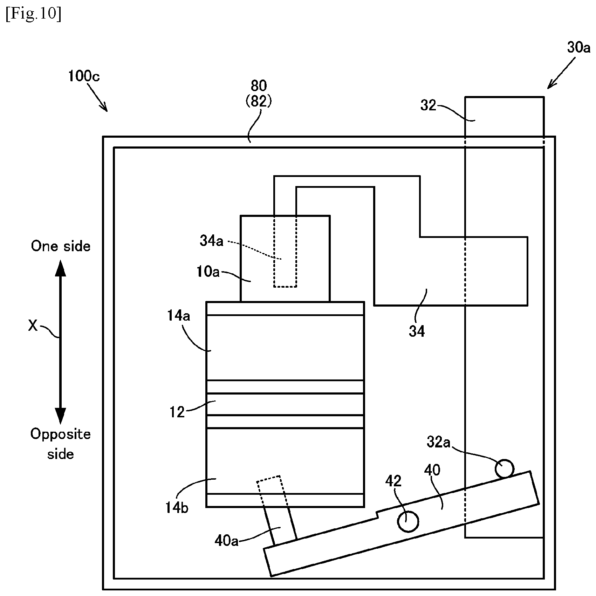

As illustrated in Figures 9 and 10, also in the electric generator 100c according to the embodiment, a user pushing in the operation member 32 toward the opposite side in the axial direction X causes the arm member 34 to move to the opposite side in the axial direction X. As a result, the second magnet 16 (not illustrated) is pushed in toward the opposite side in the axial direction X by the pushing-in part 34a. As described above, since the arm member 34 consists of a non-magnetic material, the pushing-in part 34a is not magnetically coupled to the second magnet 16. Accordingly, when the operation member 32 is further pushed in, as in the electric generator 100b (see Figure 7) described above, the second magnet 16 (see Figure 7) moves through the inside of the first magnet 12 at high speed while being freed from the pushing-in part 34a due to a magnetic attractive force. In this way, as in the electric generator 100b described above, a current flows in the coils 14a and 14b. Furthermore, since the second magnet 16 moves while being freed from the pushing-in part 34a, the second magnet 16 can vibrate at high speed in the axial direction X near the first magnet 12. In this way, it is possible to efficiently generate electricity.

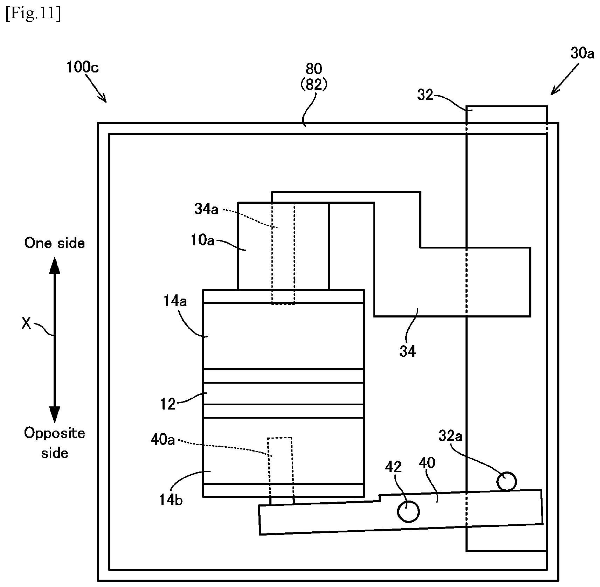

Thereafter, as illustrated in Figures 10 and 11, the user further pushing in the operation member 32 causes the locking portion 32a to push one end portion (an end on the side opposite to the pushing-back part 40a) of the arm member 40 toward the opposite side in the axial direction X. This causes the arm member 40 to swing, causing the pushing-back part 40a to move to the one side in the axial direction X. As a result, as in the electric generator 100b described above, the second magnet 16 (see Figure 8) is pushed back toward the one side in the axial direction X by the pushing-back part 40a. As described above, since the arm member 40 consists of a non-magnetic material, the pushing-back part 40a is not magnetically coupled to the second magnet 16. Accordingly, when the pushing-back part 40a further pushes back the second magnet 16 (see Figure 8) toward the one side in the axial direction X, the second magnet 16 (see Figure 5) moves to the side of the pushing-in part 34a while being freed from the pushing-back part 40a due to a magnetic repulsive force generated between the first magnet 12 and the second magnet 16 (see Figure 8). As a result, the second magnet 16 is pushed against the pushing-in part 34a. That is, the state of the electric generator 100c becomes the repulsive state.

As described above, also in the electric generator 100c according to the embodiment, the second magnet 16 can be moved at high speed in the axial direction X by pushing in the operation member 32. Furthermore, the electric generator 100c can be returned to the original state by further pushing in the operation member 32. As a result, it is possible to smoothly generate electricity.

### (Fifth Embodiment)

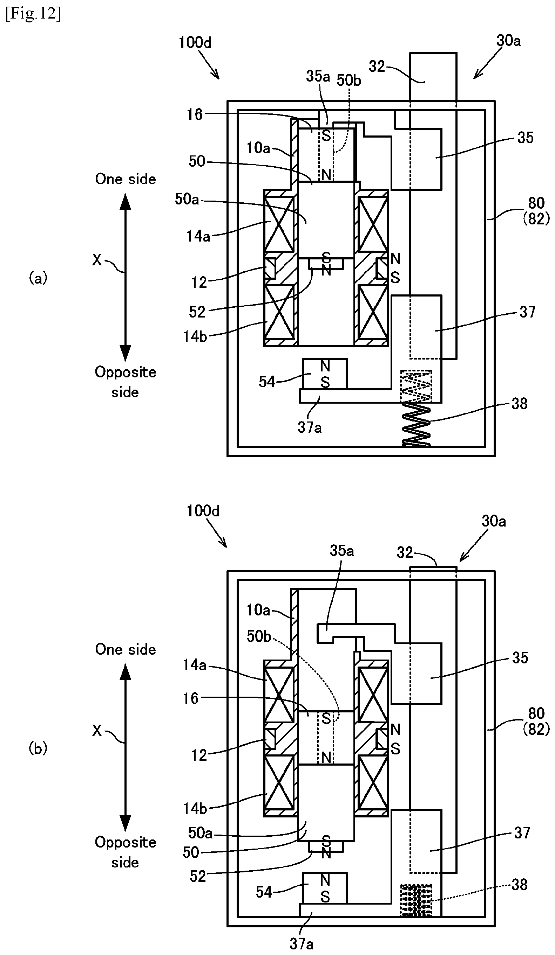

Figure 12 is a schematic view illustrating an electric generator according to the fifth embodiment of the present invention. As illustrated in Figure 12, as in the electric generator 100b illustrated in Figure 4, an electric generator 100d according to the embodiment includes a cuboid housing 80. Note that in Figure 12, only the container part 82 of the housing 80 is illustrated, and in the embodiment, the housing 80 also includes a lid part (not illustrated) detachably attached to the container part 82.

As illustrated in Figure 12, also in the electric generator 100d according to the embodiment, as in the electric generator 100b described above, the tubular member 10a, the first magnet 12, the coils 14a and 14b, the second magnet 16, and the drive part 30a are contained in the container part 82. The tubular member 10a, the first magnet 12, the coils 14a and 14b, and the second magnet 16 can have similar configurations to those in the above-described embodiments, and therefore are not described in detail. Note that in Figure 12, the tubular member 10a and the first magnet 12 are illustrated in sections for facilitating understanding of the inner structure of the tubular member 10a.

In the embodiment, the drive part 30a includes the operation member 32, arm members 35 and 37, the biasing member 38, a holding member 50, a third magnet 52, and a fourth magnet 54. The arm members 35 and 37 are fixed to the operation member 32 and move in the axial direction X of the tubular member 10a integrally with the operation member 32. The arm members 35 and 37 each consist of a non-magnetic material. As in the above-described embodiment, the biasing member 38 biases the operation member 32 and the arm members 35 and 37 toward the one side in the axial direction X. Note that the operation member 32 and the biasing member 38 can have similar configurations to those in the above-described embodiment, and therefore are not described in detail. In the embodiment, the operation member 32 corresponds to the operation part.

The holding member 50 is provided in the hollow portion in the tubular member 10a while being capable of moving in the axial direction X within the tubular member 10a. The holding member 50 holds the second magnet 16 and the third magnet 52 such that the second magnet 16 is located farther toward the one side than the third magnet 52 in the axial direction X. In the embodiment, the holding member 50 includes a solid-cylindrical first holding part 50a, and a second holding part 50b that is solid-cylindrical and has a smaller diameter than the first holding part 50a. The second holding part 50b is formed extending from the first holding part 50a toward the one side in the axial direction X.

The second magnet 16 is fixed to the holding member 50 with the second holding part 50b being inserted therein. Note that in the embodiment, in the reference state of the electric generator 100d (the state illustrated in Figure 12 (a): the state in which no external force is applied to the electric generator 100d), the second holding part 50b and a leading end portion 35a of the arm member 35 are in contact with each other, while the second magnet 16 and the leading end portion 35a are not in contact with each other. In the reference state of the electric generator 100d, the third magnet 52 is provided in the hollow portion in the tubular member 10a. In the embodiment, the third magnet 52 is fixed to the end face of the first holding part 50a on the opposite side in the axial direction X. The fourth magnet 54 is fixed to a leading end portion 37a of the arm member 37 such that the fourth magnet 54 is located farther toward the opposite side than the third magnet 52 in the axial direction X. In the embodiment, the fourth magnet 54 is provided to face the third magnet 52 in the axial direction X.

The first magnet 12, the second magnet 16, the third magnet 52, and the fourth magnet 54 are each magnetized in the axial direction X. The north poles (or the south poles) of the first magnet 12 and the fourth magnet 54 are oriented opposite to the north poles (or the south poles) of the second magnet 16 and the third magnet 52 in the axial direction X. More specifically, in the embodiment, the first magnet 12 and the fourth magnet 54 are provided such that one side in the axial direction X is the north pole and the opposite side is the south pole. In addition, the second magnet 16 and the third magnet 52 are provided such that one side in the axial direction X is the south pole and the opposite side is the north pole.

In the embodiment, the position of the holding member 50 illustrated in Figure 12 (a) is defined as the reference position of the holding member 50. In the embodiment, the holding member 50 is located to the reference position when no external force is applied to the operation member 32. In the state of the electric generator 100d illustrated in Figure 12 (a), the second magnet 16 is pushed toward the one side in the axial direction X due to a magnetic repulsive force generated between the first magnet 12 and the second magnet 16. As a result, the holding member 50 is pushed against the leading end portion 35a of the arm member 35. Note that in the embodiment, the leading end portion 35a of the arm member 35 corresponds to the pushing-in part, and the leading end portion 37a of the arm member 37 corresponds to the pushing-back part. Hereinafter, the leading end portion 35a will be denoted as a pushing-in part 35a, and the leading end portion 37a will be denoted as a pushing-back part 37a.

In the embodiment, a user pushing in the operation member 32 toward the opposite side in the axial direction X causes the arm member 35 to move to the opposite side in the axial direction X. As a result, the holding member 50 in the reference position (see Figure 12 (a)) along with the second magnet 16 and the third magnet 52 held by the holding member 50 are pushed in toward the opposite side in the axial direction X by the pushing-in part 35a. When the operation member 32 is further pushed in, as illustrated in Figure 12 (b), the second magnet 16 moves through the inside of the first magnet 12 at high speed while being freed from the pushing-in part 35a due to a magnetic attractive force generated between the first magnet 12 and the second magnet 16. In this way, as in the electric generator 100b described above, a current flows in the coils 14a and 14b. Furthermore, as described above, since the second magnet 16 moves while being freed from the pushing-in part 35a, the second magnet 16 can vibrate faster in the axial direction X near the first magnet 12. In this way, it is possible to efficiently generate electricity.

Thereafter, when the user releases his or her hand from the operation member 32, the arm member 37 is pushed back toward the one side in the axial direction X due to a repulsive force of the biasing member 38. In this way, the fourth magnet 54 fixed to the pushing-back part 37a moves toward the one side in the axial direction X. At this time, the third magnet 52 is pushed toward the one side in the axial direction X due to a magnetic repulsive force generated between the third magnet 52 and the fourth magnet 54. Here, in the embodiment, the biasing member 38, the first magnet 12, the second magnet 16, the third magnet 52, and the fourth magnet 54 are provided such that a total force of a repulsive force A generated between the third magnet 52 and the fourth magnet 54 and a repulsive force B generated by the biasing member 38 becomes larger than a magnetic attractive force C generated between the first magnet 12 and the second magnet 16. Accordingly, the third magnet 52, the holding member 50, and the second magnet 16 are pushed back toward the one side in the axial direction X due to the repulsive force of the biasing member 38 and the repulsive force between the third magnet 52 and the fourth magnet 54. As a result, the electric generator 100d is returned to the state illustrated in Figure 12 (a).

As described above, also in the electric generator 100d according to the embodiment, the second magnet 16 can be moved in the axial direction X at high speed by pushing in the operation member 32. Furthermore, the electric generator 100d can be returned to the original state by releasing a hand from the operation member 32. As a result, it is possible to smoothly generate electricity. Furthermore, in the embodiment, it is possible to prevent magnets from colliding with each other, or to prevent a magnet from colliding with other members, so that the durability of the electric generator 100d can be improved.

### INDUSTRIAL APPLICABILITY

According to the present invention, it is possible to obtain an electric generator capable of efficiently generating electricity in a space-saving manner.

### REFERENCE SIGNS LIST

10, 10a: tubular member
12: first magnet
14a, 14b: coil
16: second magnet
18, 80: housing
20: cylindrical part
22a, 22b, 22c, 22d: flange portion
26a, 26b: operation part
30, 30a: drive part
32: operation member
34, 35, 36, 37, 40: arm member
38: biasing member
50: holding member
52: third magnet
54: fourth magnet
100, 100a, 100b, 100c, 100d: electric generator

## Claims

1. An electric generator, comprising:
a tubular member including a hollow portion;
a first magnet fixed to the tubular member;
a coil fixed along an exterior surface of the tubular member; and
a second magnet magnetized in an axial direction of the tubular member, the second magnet being arranged in the hollow portion such that the second magnet is located more inward in a radial direction of the tubular member than the first magnet as seen from the axial direction and being movable in the axial direction.

2. The electric generator according to claim 1, wherein the first magnet has a ring shape.

3. The electric generator according to claim 1 or 2, wherein the first magnet and the coil are provided in different positions in the axial direction.

4. The electric generator according to any one of claims 1 to 3, further comprising a drive part that moves the second magnet in the axial direction relative to the coil.

5. The electric generator according to claim 4, wherein
the drive part includes:
a third magnet arranged in the hollow portion of the tubular member;
a holding member that is arranged in the hollow portion while being capable of moving in the axial direction and that holds the second magnet and the third magnet such that the second magnet is located farther toward one side in the axial direction than the third magnet;
a fourth magnet provided farther toward an opposite side than the third magnet in the axial direction such that a repulsive force is generated in the axial direction between the fourth magnet and the third magnet;
a pushing-in part provided while being capable of moving in the axial direction, the pushing-in part moving toward the opposite side in the axial direction, thereby pushing in the holding member from a reference position toward the opposite side; and
a pushing-back part that holds the fourth magnet, the pushing-back part being provided while being capable of moving in the axial direction in conjunction with the pushing-in part, wherein
in the reference position, the second magnet is located farther toward the one side than the first magnet.

6. The electric generator according to claim 5, further comprising a housing that contains the tubular member, the first magnet, the coil, the second magnet, and the drive part, wherein
the drive part further includes:
an operation part, a part of which protrudes to an outside of the housing, the operation part being provided while being capable of moving in the axial direction in conjunction with the pushing-in part and the pushing-back part; and
a biasing member that biases the operation part, the pushing-in part, and the pushing-back part toward the one side.

7. The electric generator according to any one of claims 1 to 6, wherein
the coil includes a first coil and a second coil that are provided spaced apart in the axial direction, and
the first magnet is provided between the first coil and the second coil in the axial direction.

8. The electric generator according to claim 7, wherein the second coil and the first magnet are arranged such that the second magnet passes through an inside of the first coil in the radial direction and reaches an inside of the first magnet in the radial direction.
